(19) Europäisches Patentamt
European Patent Office
Office européen des brevets

(11) **EP 2 952 865 B1**

(12) **EUROPÄISCHE PATENTSCHRIFT**

(45) Veröffentlichungstag und Bekanntmachung des Hinweises auf die Patenterteilung:
**26.07.2017 Patentblatt 2017/30**

(51) Int Cl.:
*G01K 17/12* *(2006.01)*     *G01K 17/20* *(2006.01)*
*G05D 23/19* *(2006.01)*     *F24D 19/10* *(2006.01)*

(21) Anmeldenummer: **15168300.0**

(22) Anmeldetag: **20.05.2015**

(54) **VERFAHREN ZUR BESTIMMUNG DES VERBRAUCHS VON GAS UND STROM EINES HEIZGERÄTS**

METHOD FOR DETERMINING THE CONSUMPTION OF GAS AND ELECTRICITY OF A HEATING DEVICE

PROCÉDÉ DE DÉTERMINATION DE LA CONSOMMATION DE GAZ ET DE COURANT D'UN APPAREIL DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2014 DE 102014008011**

(43) Veröffentlichungstag der Anmeldung:
**09.12.2015 Patentblatt 2015/50**

(73) Patentinhaber: **Vaillant GmbH**
**42859 Remscheid (DE)**

(72) Erfinder:
• **Littek, Jörg**
**44268 Herne (DE)**
• **Hagen, Daniel Schulze**
**42349 Wuppertal (DE)**
• **Richter, Klaus**
**42855 Remscheid (DE)**
• **Couraud, Christophe**
**44690 SAINT FIACRE SUR MAINE (FR)**
• **Franke, Benedikt**
**41470 Neuss (DE)**
• **Patay, Georg**
**2371 Hinterbrühl (AT)**
• **Faust, Christian**
**40699 Erkrath (DE)**

(74) Vertreter: **Popp, Carsten**
**Vaillant GmbH**
**IRP**
**Berghauser Straße 40**
**42859 Remscheid (DE)**

(56) Entgegenhaltungen:
DE-A1-102004 054 118    DE-A1-102008 039 525
DE-A1-102012 104 268

EP 2 952 865 B1

**Beschreibung**

Die Erfindung betrifft ein Verfahren zur Verbrauchsbestimmung von Gas und Strom bei einem Heizgerät.

Im Zuge von steigenden Energiekosten ist es für den Anwender interessant, aktuelle Verbrauchsdaten von Gas und Strom seines Gas-Heizgeräts angezeigt zu bekommen. Insbesondere eine Ermittlung und Anzeige dieser Werte auf Tages- und Monatsbasis gibt dem Anwender erstens die Möglichkeit einer Einschätzung der entstehenden Kosten sowie zweitens einer Überprüfung von Sparmaßnahmen, zum Beispiel durch eine Änderung des Heizverhaltens.

Zur Erfassung von Gas- und Stromverbräuchen mit hinreichender Genauigkeit werden nach dem Stand der Technik spezielle Gas- und Stromzähler eingesetzt. Nachteile von bestehenden Gas- und Stromzählern bzw. entsprechenden Sensoren sind zusätzliche Kosten sowie entweder zusätzlich erforderlicher Bauraum im Heizgerät oder die externe Anordnung. Ferner ist entweder eine zusätzliche Schnittstelle zwischen diesen Verbrauchszählern und der Heizgerätesteuerung erforderlich, um die Verbrauchsdaten im Display des Heizgerätes anzuzeigen, oder eine eigene Steuerung mit Display.

Die Patentschrift DE 10 2008 039 525 A1 offenbart beispielsweise einen Wärmezähler, bei dem die Temperaturdifferenz zwischen Vorlauf und Rücklauf und der Volumenstrom des Wärmeträgers erfasst werden und die an die Verbrauchsstelle gelieferte bzw. die an der Verbrauchsstelle entzogene Wärmemenge errechnet wird.

In ähnlicher Weise offenbart die Patentschrift DE 10 2012 104 268 A1 einen Wärmezähler, bei dem die Temperaturdifferenz zwischen Vorlauf und Rücklauf zu einer Auswerteeinheit übertragen und dort mit den charakteristischen wärmetechnischen Kenndaten des Heizkörpers rechentechnisch zu einem Verlustwert verknüpft werden.

Aus der Patentschrift DE 10 2004 054 118 A1 ist ein Wärmezähler bekannt, bei dem die Wärmemenge anhand des Durchflussvolumens, der Vorlauf- und der Rücklauftemperatur und unter Einbeziehung eines Korrektivs berechnet wird.

Aufgabe der Erfindung ist es, ein Heizgerät sowie ein Verfahren zum Betreiben des Heizgeräts mit einer kostengünstigen und raumsparenden Erfassung des Gas- und/oder Stromverbrauchs bereitzustellen.

Erfindungsgemäß wird die Aufgabe durch ein Verfahren zum Betreiben eines Heizgeräts gelöst, bei dem die bereits für den normalen Betrieb erforderlichen und daher im Heizgerät vorhandenen Sensoren zusammen mit den Informationen in der Heizgerätesteuerung genutzt werden, um Gasverbrauchswerte zu ermitteln. Dazu wird die Temperaturdifferenz und der Volumenstrom bzw. der Massenstrom, welcher direkt mit dem Volumenstrom im Zusammenhang steht, des durch das Heizgerät erwärmten Wärmeträgermediums gemessen. Dieser Messwert wird dividiert durch den Wirkungsgrad des Heizgeräts, der jedoch von der Temperatur abhängig ist. Da diese aufgrund der Messung bekannt ist, kann sie durch eine im Heizgerät gespeicherte Wirkungsgrad-Temperatur-Abhängigkeit ermittelt werden. Die Speicherung kann in Form einer Tabelle, innerhalb derer gegebenenfalls interpoliert wird, oder durch einen gespeicherten Algorithmus mit ebenfalls gespeicherten Parametern erfolgen. Der so ermittelte momentane Gasverbrauch wird dann über eine Zeitperiode auf summiert oder auf integriert, um den Gasverbrauch zu erhalten.

In einer Weiterbildung der Erfindung wird ebenfalls der Verbrauch an elektrischer Energie ermittelt. Hierzu wird erfasst, welche elektrischen Aggregate des Heizgeräts eingeschaltet sind. Dabei wird auch mit erfasst, das ein Standby-Verbrauch an elektrischer Leistung permanent vorliegt. Die jeweils aufgenommenen Leistungen sind bekannt und gespeichert. Die Umrechnung der momentan aufgenommenen elektrischen Leistung in verbrauchte elektrische Energie erfolgt durch Aufsummierung oder Integration.

In einer vorteilhaften Ausführungsvariante des Verfahrens werden die ermittelten Verbräuche auf einem Display des Heizgeräts angezeigt.

In einer Weiterbildung des erfindungsgemäßen Verfahrens wird der Messwert der Temperaturdifferenz mit einen zuvor ermittelten Korrekturwert korrigiert.

Die Verfahrensschritte erfolgen erfindungsgemäß in der ohnehin vorhandenen Steuerung des Heizgeräts.

Das erfindungsgemäße Verfahren wird unter Bezugnahme auf die Figuren detailliert erläutert.

Die Ermittlung des Gasverbrauchs erfolgt wie nachfolgend beschrieben. Grundsätzlich gilt bei einem Gas-Heizgerät zwischen der zugeführten Leistung $\dot{Q}_G$ des Gases und der abgegebenen Wärmeleistung $\dot{Q}_W$ folgender Zusammenhang:

$$\dot{Q}_G = \frac{\dot{Q}_W}{\eta}$$

Darin ist $\eta$ der momentane Wirkungsgrad des Heizgerätes.

Den Gasverbrauch in kWh erhält man über:

$$Q_G = \int \frac{\dot{Q}_W}{\eta} * dt$$

Innerhalb der Gerätesteuerung wird die Integration dadurch realisiert, dass die Berechnung zu äquidistanten Zeitpunkten im Abstand $t_{step}$ durchgeführt wird und die Energieanteile aufsummiert werden:

$$Q_G = \sum_{i=1}^{n} \frac{\dot{Q}_{W_i}}{\eta_i} * t_{step}$$

Die Anzahl $n$ der Berechnungsschritte bestimmt also den Zeitraum, über den der Gasverbrauch ermittel wird (z.B. für einen Tag).

Im Folgenden wird beschrieben, wie die momentane Wärmeleistung $\dot{Q}_W$ und der momentane Wirkungsgrad $\eta$ berechnet werden. Für die abgegebene Wärmeleistung gilt:

$$\dot{Q}_W = \dot{V} * \rho_W * cp_W * \left( T_{Vorlauf} - T_{Rücklauf} \right)$$

Darin sind:

$\rho_{Wasser}$ = 1000 kg/m$^3$
$cp_{Wasser}$ = 4,182 kJ/kg K

Im Heizgerät sind nach dem Stand der Technik ohnehin zwei Temperatursensoren, jeweils im Vorlauf und Rücklauf, und ein Volumenstromsensor vorhanden, deren Werte regelmäßig erfasst und der Steuerung zur Verfügung gestellt werden. Aus diesen gelieferten Signalen $T_{Vorlauf}$, $T_{Rücklauf}$ sowie $\dot{V}$ kann die Wärmeleistung gemäß obiger Formel berechnet werden.

Eine abgegebene Wärmeleistung ergibt sich, solange der Volumenstrom größer Null und die Vorlauftemperatur größer ist als die Rücklauftemperatur ist.

Der Wirkungsgrad des Gas-Heizgerätes im Betrieb hängt im Wesentlichen von der mittleren Wassertemperatur $T_{Mittel}$ im Primärwärmetauscher ab. Diese Temperatur kann wie folgt berechnet werden:

$$T_{Mittel} = \left( T_{Vorlauf} - T_{Rücklauf} \right) / 2$$

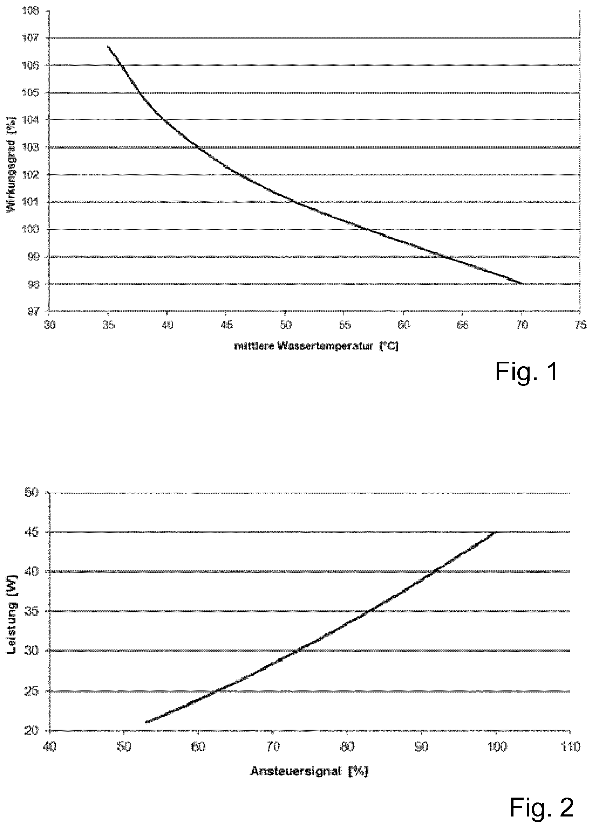

Fig. 1 zeigt als Beispiel die Kennlinie eines Gasbrennwert-Heizgerätes, die durch Messung an einem Prüfstand ermittelt wurde.

Untersuchungen zeigten, dass diese gerätespezifische Kennlinie nicht nennenswert von weiteren Einflussgrößen abhängt und sich auch insbesondere über die Lebensdauer des Gerätes nicht ändert.

Diese Kennlinie wird nun in der Steuerung des Heizgeräts hinterlegt. Zu jedem Berechnungsschritt kann damit aus der Vor- und Rücklauftemperatur über diese Kennlinie der aktuelle Wirkungsgrad bestimmt werden.

Wie erläutert, werden für die Berechnung des Gasverbrauchs die 3 Sensorsignale $T_{Vorlauf}$, $T_{Rücklauf}$ sowie $\dot{V}$ des Volumenstromsensors benötigt. Die Toleranzen dieser Sensoren gehen somit direkt in die Berechnung des Gasverbrauchs ein. Werden aus Kostengründen preiswerte Sensoren verwendet, so ist insbesondere der Fehler durch die Temperatursensoren groß, da bei diesen die Differenz ($T_{Vorlauf} - T_{Rücklauf}$) in die Berechnung eingeht. Insbesondere bei kleinen Temperaturdifferenzen zwischen Vor- und Rücklauf wir der Fehler dann unter Umständen relativ groß, was folgendes Beispiel zeigt:

$$T_{Vorlauf} = 35\ °C,\ T_{Rücklauf} = 30°C \text{ bedeutet } \left( T_{Vorlauf} - T_{Rücklauf} \right) = (35 - 30)\ K = 5\ K$$

Haben beide Temperatursensoren im relevanten Temperaturbereich eine Genauigkeit von beispielsweise +/- 1K, so bedeutet das für die Temperaturdifferenz

$$\left( T_{Vorlauf} - T_{Rücklauf} \right) = (36 - 29)\ K = 7\ K \text{ als höchster Wert,}$$

$$\left( T_{Vorlauf} - T_{Rücklauf} \right) = (34 - 31)\ K = 3\ K \text{ als kleinster Wert.}$$

Die real angenommene Temperaturdifferenz von 5K würde über diese Temperatursensoren mit Werten zwischen 3...7 K errechnet, was 5K +/- 40% entspricht.

Die angenommene Temperaturdifferenz von 5K ist bei Brennwert-Heizungen z.B. in Kombination mit Fußbodenkreisen ein durchaus üblicher Betriebspunkt. Ohne weitere Maßnahmen würde hier die Berechnung des Gasverbrauchs ebenfalls sehr große Fehler aufweisen.

Um diesen Fehler zu minimieren, wird nachfolgend beschriebenes Verfahren als Justage hinzugefügt. Das Verfahren nutzt die Tatsache, dass es Betriebszeiten gibt, zu denen die Temperaturen an beiden Sensoren identisch sind. Solche Zeiten ergeben sich im Betrieb beispielsweise, wenn das Heizgerät abschaltet und die Pumpe noch nachläuft, um die Restwärme im System zu verteilen. Nach einer Wartezeit von z.B. 10min tritt ein stationärer Zustand ein, bei dem Vor- und Rücklauf eine identische Temperatur haben.

In der Praxis ergeben sich hier Abweichungen $T_{Vorlaul}$ - $T_{Rücklauf}$ = $deltaT_i$ aufgrund der Sensortoleranzen.

Die einzelnen Abweichungen $deltaT_i$, die sich zu solchen Zeitpunkten ergeben, werden in der Steuerung festgehalten. Der sich ergebende Mittelwert $deltaT_{Mittel}$ wird dann dazu genutzt, um die Rücklauftemperatur entsprechend zu korrigieren:

$$T_{Rücklauf} = T_{Rücklauf\_Sensor} + deltaT_{Mittel}$$

Da die Abweichungen $deltaT_i$ im Betrieb bei verschiedenen absoluten Temperaturen ermittelt werden, repräsentiert $deltaT_{Mittel}$ einen guten Justagewert über den gesamten Temperaturbereich.

Anstelle eines Mittelwertes über alle $deltaT_i$ kann alternativ auch der Median berücksichtigt werden. Insgesamt werden mit diesem Verfahren also die Offsetfehler der NTC-Sensoren kompensiert, um die Genauigkeit des Differenzwertes $T_{Vorlauf}$ - $T_{Rücklauf}$ zu erhöhen.

Die verbleibende Ungenauigkeit in der Gasverbrauchsberechnung wird daher im Wesentlichen nur noch von der Toleranz $\dot{V}$ des Volumenstromsensors bestimmt.

Auch wenn bei einem Gas-Heizgerät die Energiekosten in erster Linie durch den Gasverbrauch bestimmt werden, ist auch der Verbrauch an elektrischer Energie von Interesse. Der Erfindung liegt die Idee zugrunde, den Stromverbrauch aus den Informationen in der Heizgerätesteuerung und hinterlegten komponentenspezifischen Daten zu berechnen.

Dazu werden zunächst alle Komponenten ermittelt, die überhaupt eine elektrische Leistungsaufnahme haben. Diese Komponenten lassen sich folgenden Klassen zuordnen:

Standby-Verbraucher, zum Beispiel der Verbrauch der Steuerung selbst. Diese Aggregate haben eine konstante Leistungsaufnahme $P_{S\tan dby}$, sobald das Heizgerät mit Strom versorgt wird und in Bereitschaft ist. Der ermittelte konstante Verbrauch dieser Komponenten ist in der Steuerung hinterlegt.

On/Off-Verbraucher, zum Beispiel Gasventil, Displaybeleuchtung. Diese Aggregate sind Verbraucher, die durch die Steuerung während des Betriebes ein- oder ausgeschaltet werden. Im eingeschalteten Zustand haben Sie eine konstante elektrische Leistungsaufnahme $P_{on}$, die am Prüfstand ausgemessen und in der Steuerung hinterlegt ist. Im ausgeschalteten Zustand ist die Leistungsaufnahme $P_{off}$ = 0W. Da in der Steuerung selbst zu jedem Zeitpunkt der Schaltzustand jeder Komponente bekannt ist, kann die aktuelle Leistungsaufnahme jeder dieser Komponenten angegeben werden.

Aggregate mit variabler Stromaufnahme, zum Beispiel: Gebläse, Pumpe. Einige Verbraucher haben eine variable Leistungsaufnahme. Diese ist zum Beispiel abhängig von einem Ansteuersignal der Steuerung. Um zu jedem Zeitpunkt die Leistungsaufnahme dieser Komponenten angeben zu können, ist eine am Prüfstand ausgemessene Kennlinie der Leistungsaufnahme für diese Komponenten in der Steuerung hinterlegt.

Fig. 2 zeigt als Beispiel die Kennlinie der Leistungsaufnahme einer Pumpe.

Die aktuelle aufgenommene elektrische Leistung $P_{el}$ wird berechnet aus:

$$P_{el} = \sum P_{S\tan dby} + \sum P_{On\_Off} + \sum P_{var iabel}$$

Die elektrische Energie ergibt sich damit zu:

$$W_{el} = \int P_{el} * dt$$

Innerhalb der Gerätesteuerung wird die Integration dadurch realisiert, dass die Berechnung zu äquidistanten Zeitpunkten im Abstand $t_{step}$ durchgeführt wird und die Energieanteile aufsummiert werden:

$$W_{el} = \sum_{i=1}^{n} P_{el\,i} * t_{step}$$

Die Anzahl $n$ der Berechnungsschritte bestimmt also den Zeitraum, über den der Stromverbrauch ermittel wird (z.B. für einen Tag).

Da Gasheizgeräte oft sowohl für Heizzwecke als auch für Warmwasserbereitung zum Einsatz kommen, werden die Verbrauchswerte für Gas und Strom beispielsweise tageweise getrennt, die beiden Verwendungsarten Heizung und Warmwasser berechnet und gespeichert. In einer Anzeige des Heizgerätes können damit dann beispielsweise Balkendiagramme der Verbräuche getrennt für Strom, Gas, Heizung und Warmwasserbereitung dargestellt werden. Neben einer Darstellung auf Tages- oder Monatsbasis sind auch vergleichende Darstellungen (aktuelles Jahr-Vorjahr) möglich.

## Patentansprüche

1. Verfahren zur Verbrauchsbestimmung von Gas während einer Zeitperiode an einem mit Brenngas beheizten Heizgerät, welches ein Wärmeträgermedium zur Erwärmung einer Wärmesenke erwärmt, **gekennzeichnet durch** die Schritte
Erfassen der abgegebenen Wärmeleistung durch Messung der Temperaturdifferenz des Wärmeträgermediums zwischen Vorlauf und Rücklauf mittels zweier Temperatursensoren, Messung des Volumenstroms des Wärmeträgermediums mittels eines Volumenstromsensors, und Multiplikation der Messwerte,
Ermitteln des Wirkungsgrads durch Erfassung einer Betriebstemperatur und durch Verwendung eines gespeicherten Wirkungsgrad-Temperatur-Abhängigkeit,
Ermitteln des momentanen zeitbezogenen Gasverbrauchs durch Division der abgegebenen Wärmeleistung durch den Wirkungsgrad,
Ermitteln des Gasverbrauchs während der Zeitperiode durch Integration über die Zeit oder durch Aufsummieren von mit der Dauer von Zeitinkrementen multiplizierten momentanen zeitbezogenen Gasverbräuchen.

2. Verfahren nach Anspruch 1, **gekennzeichnet durch** die parallel oder danach ausgeführte Verbrauchsbestimmung von elektrischer Energie mit den zusätzlichen Schritten
Erfassen des Einschaltzustands der elektrischen Aggregate des Heizgeräts, Summieren aller hinterlegten konstanten elektrischen Leistungen unter Berücksichtigung des Einschaltzustands beziehungsweise aller hinterlegten lastabhängigen elektrischen Leistung unter Berücksichtigung der Last zu einer momentanen elektrischen Gesamtleistung
Ermitteln des Verbrauchs an elektrischer Energie während der Zeitperiode durch Integration über die Zeit oder durch Aufsummieren von mit der Dauer von Zeitinkrementen multiplizierten momentanen elektrischen Gesamtleistung.

3. Verfahren nach Anspruch 1 oder 2, **gekennzeichnet durch** den zusätzlichen Schritt Anzeigen des momentanen zeitbezogenen Gasverbrauchs und/oder des Gasverbrauchs während der Zeitperiode und/oder der momentan aufgenommenen elektrischen Leistung und/oder des Verbrauchs an elektrischer Energie während der Zeitperiode auf einem Display des Heizgeräts.

4. Verfahren nach einem der vorhergehenden Ansprüche, **dadurch gekennzeichnet, dass** nach der erstmaligen Inbetriebnahme des Heizgeräts und/oder in regelmäßigen Zeitabständen ein Zustand erzeugt wird, in dem keine Temperaturdifferenz des Wärmeträgermediums vorliegt und die von den Temperatursensoren gemessene Temperaturdifferenz als Korrekturwert gespeichert wird, und dass in dem Verfahrensschritt, Erfassen der abgegebenen Wärmeleistung durch Messung der Temperaturdifferenz des Wärmeträgermediums zwischen Vorlauf und Rücklauf mittels zweier Temperatursensoren, Messung des Volumenstroms des Wärmeträgermediums mittels eines Volumenstromsensors, und Multiplikation der Messwerte' vor der Multiplikation der Korrekturwert von der Temperaturdifferenz des Wärmeträgermediums zwischen Vorlauf und Rücklauf subtrahiert wird.

**Claims**

1. Method for determining the consumption of gas during a time period on a heating device heated by fuel gas, which device heats a heat transfer medium in order to heat a heat sink, **characterised by** the following steps:

   detecting the emitted heat output by measuring the temperature difference of the heat transfer medium between flow and return flow by means of two temperature sensors,
   measuring the volume flow of the heat transfer medium by means of a volume flow sensor and multiplication of the measured values,
   determining the efficiency by detecting an operating temperature and by using a stored efficiency-temperature dependency,
   determining the instantaneous time-based gas consumption by dividing the emitted heat output by the efficiency,
   determining the gas consumption during the time period by integration over time or by adding up instantaneous time-based gas consumptions multiplied by the duration of time increments.

2. Method according to claim 1, **characterised by** determining the consumption of electrical energy simultaneously or thereafter, having the additional steps of:

   detecting the switched-on state of the electrical units of the heating device,
   adding up all stored constant electrical outputs by taking into account the switched-on state or all stored load-dependent electrical output by taking into account the load relating to an instantaneous total electrical output,
   determining the consumption of electrical energy during the time periods by integration over time or by adding up instantaneous total electrical output multiplied by the duration of time increments.

3. Method according to claim 1 or 2, **characterised by** the additional step of:

   displaying the instantaneous time-based gas consumption and/or the gas consumption during the time periods and/or the instantaneously recorded electrical output and/or the consumption of electrical energy during the time periods on a display of the heating device.

4. Method according to one of the preceding claims, **characterised in that** after the first commissioning of the heating device and/or at regular intervals, a state is generated in which there is no temperature difference in the heat transfer medium and the temperature difference measured by the temperature sensors is stored as a correction value, and **in that** in the method step 'detecting the emitted heat output by measuring the temperature difference of the heat transfer medium between flow and return flow by means of two temperature sensors, measuring the volume flow of the heat transfer medium by means of a volume flow sensor and multiplication of the measured values', the correction value is subtracted from the temperature difference of the heat transfer medium between flow and return flow before multiplication.

**Revendications**

1. Procédé de détermination de la consommation de gaz sur une certaine période de temps dans un appareil de chauffage chauffé par un gaz combustible, qui chauffe un milieu caloporteur pour chauffer un puits de chaleur, **caractérisé par** les étapes consistant à:

   détecter la puissance calorifique délivrée par mesure de la différence de température du milieu caloporteur entre l'aller et le retour au moyen de deux capteurs de température, mesure du courant volumique du milieu caloporteur au moyen d'un capteur de courant volumique et multiplication des valeurs de mesure,
   déterminer le rendement par détermination d'une température de fonctionnement et par utilisation d'une dépendance mémorisée du rendement à la température,
   déterminer la consommation de gaz momentanée rapportée au temps par division de la puissance calorifique délivrée par le rendement,
   déterminer la consommation de gaz au cours de la période de temps par intégration en fonction du temps ou par sommation de consommations de gaz momentanées rapportées au temps multipliées par la durée d'incréments de temps.

2. Procédé selon la revendication 1, **caractérisé par** la détermination de la consommation d'énergie électrique réalisée en parallèle ou après coup avec les étapes supplémentaires consistant à :

déterminer l'état de fonctionnement des groupes électriques de l'appareil de chauffage,
sommer toutes les puissances électriques constantes mémorisées en tenant compte de l'état de fonctionnement, éventuellement de toute la puissance électrique mémorisée en fonction de la charge en tenant compte de la charge à une puissance électrique totale momentanée,
déterminer la consommation d'énergie électrique au cours de la période de temps par intégration en fonction du temps ou par sommation de la puissance électrique totale momentanée multipliée par la durée d'incréments de temps.

3. Procédé selon la revendication 1 ou 2, **caractérisé par** l'étape supplémentaire consistant à afficher la consommation de gaz momentanée rapportée au temps et/ou la consommation de gaz au cours de la période de temps et/ou la puissance électrique momentanément reçue et/ou la consommation d'énergie électrique au cours de la période de temps sur un affichage de l'appareil de chauffage.

4. Procédé selon l'une quelconque des revendications précédentes, **caractérisé en ce que,** après la mise en oeuvre pour la première fois de l'appareil de chauffage et/ou à intervalles de temps réguliers, il apparaît un état dans lequel aucune différence de température du milieu caloporteur ne se produit et la différence de température mesurée par les capteurs de température est mémorisée comme valeur de correction, et **en ce que**, lors de l'étape du procédé visant à déterminer la puissance calorifique délivrée par mesure de la différence de température du milieu caloporteur entre l'aller et le retour au moyen de deux capteurs de température, mesure du courant volumique du milieu caloporteur au moyen d'un capteur de courant volumique et multiplication des valeurs de mesure, la valeur de correction est soustraite de la différence de température du milieu caloporteur entre l'aller et le retour avant la multiplication de la valeur de correction.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008039525 A1
- DE 102012104268 A1
- DE 102004054118 A1